# EUROPÄISCHE PATENTANMELDUNG

(11) **EP 4 207 496 A1**
(43) Veröffentlichungstag der Anmeldung: **05.07.2023**
(21) Anmeldenummer: 22150137.2
(22) Anmeldetag: 04.01.2022
(51) Int. Cl.: H01R 4/30, H01R 11/28, H01R 4/34, H01R 13/44

(54) **MODULVERBINDER**

(71) Anmelder: Intercable Automotive Solutions GmbH, 39031 Bruneck (IT)
(72) Erfinder: BAUMGARTNER, Christoph, 39031 Bruneck (IT)
(74) Vertreter: Maiwald GmbH

(57) **Zusammenfassung**

Die Erfindung betrifft einen Modulverbinder (1), insbesondere für Batterien für ein Fahrzeug, mit zwei Verbindungsteilen (16, 17), die elektrisch leitend miteinander verbindbar sind, wobei das erste Verbindungsteil (16) ein erstes Leiterelement (2) und ein erstes Kontaktelement (11) aufweist, das zweite Verbindungsteil (17) ein zweites Leiterelement (3) und ein zweites Verbindungselement (12) aufweist, wobei die beiden Verbindungsteile (16, 17) über ein gemeinsames Befestigungselement (4) miteinander verbindbar sind, wobei in dem ersten Verbindungsteil (16) in einem Zwischenraum (9, 9a, 9b) zwischen dem Befestigungselement (4) und dem ersten Verbindungselement (11) ein Trennelement (6) angeordnet ist und das Befestigungselement (4) durch das Trennelement (6) hindurch verläuft, und wobei zur Herstellung einer elektrisch leitenden Verbindung zwischen den beiden Verbindungsteilen (16, 17) der Modulverbinder (1) ausgebildet ist, durch eine Veränderung der Position des Befestigungselements (4) von einem ersten Zustand, in dem keine elektrische leitende Verbindung zwischen beiden Verbindungsteilen (16, 17) besteht, in einen zweiten, elektrisch leitenden Zustand der beiden Verbindungsteile (16, 17), eine Kontaktfläche (11a) des ersten Kontaktelements (11) des ersten Leiterelements (2) mit einer Kontaktfläche (12a) des zweiten Kontaktelements (12) des zweiten Leiterelements (3) in direkten Kontakt zu bringen, wobei die Kontaktflächen (11a, 12a) der beiden Leiterelemente (2, 3) jeweils zu einer Vertikalen V zumindest teilweise schräg-verlaufende Kontaktflächen (11a, 12a) ausgebildet sind, welche bei einer elektrisch leitenden Kontaktierung zueinander komplementär ausgerichtet sind, um eine formschlüssige Kontaktverbindung zwischen den beiden schrägeverlaufenden Kontaktflächen (11a, 12a) der Verbindungselemente (11, 12) herstellen.

## Beschreibung

### Technisches Gebiet

Die vorliegende Erfindung betrifft einen Modulverbinder, insbesondere für Batterien für ein Fahrzeug.

### Technischer Hintergrund

Modulverbinder werden eingesetzt, um einzelne Module, die eine Batterie in einem Fahrzeug bilden, miteinander zu verbinden. Da derartige Module aus stromführenden Komponenten bestehen, kann die direkte Berührung dieser Module durch Menschen, wie zum Beispiel einem Servicemitarbeiter in einer Werkstatt, gefährlich sein, weshalb ein entsprechender Berührschutz vorzusehen ist, um die Gefahr zu minimieren, dass stromführende Teile des Modulverbinders während eines Wartungs- oder Reparaturfalls am Fahrzeug berührt werden können.

In der EP 34 19 119 B1 wird ein derartiger Modulverbinder beschrieben, der dieser Gefahr mit einem entsprechenden Berührschutz begegnet. Die Übertragung von Strömen zwischen zwei Leitern erfolgt hierbei über den Modulverbinder mittels einer sogenannte Strombrücke, welche als Kontakthülse ausgebildet ist. Diese besteht wiederum aus zwei stromführenden Leitern, die für eine elektrische Kontaktierung miteinander verbunden werden. Der Berührschutz sieht dabei vor, dass stromführende Teile der Strombrücke nicht direkt durch den Menschen zugänglich sind.

Ein Problem bei Modulverbindern mit derartig ausgeführten Strombrücken besteht jedoch darin, dass mit Dauer der Benutzung des Modulverbinders, also einem wiederholten Kontaktieren und Trennen der beiden stromführenden Leiter, die beiden Oberflächen der zu kontaktierenden Leiter der Strombrücke mit der Zeit miteinander verkleben oder kaltverschweißen können. Dadurch muss der Kraftaufwand stetig erhöht werden, um diese beiden Kontaktflächen der Strombrücke sicher und zuverlässig voneinander zu trennen. Dies beschriebene Einsatzszenario beeinträchtigt die Lebensdauer und die Funktionalität des Modulverbinders und führt letztlich zu einem erhöhten Wartungsbedarf für den Modulverbinder mit den damit verbundenen Mehrkosten.

### Zusammenfassung der Erfindung

Es ist deshalb eine Aufgabe der Erfindung ein Konzept für einen verbesserten Modulverbinder bereitzustellen, das unter Einsatz von einfachen Mitteln die Nachteile von bekannten Modulverbindern minimiert und die Einsatzbereitschaft und Funktionalität des erfindungsgemäßen Modulverbinders zuverlässig gewährleistet.

Diese Aufgabe wird durch den Gegenstand des unabhängigen Anspruchs gelöst. Ausführungsformen und Weiterbildungen sind den abhängigen Ansprüchen, der Beschreibung und den Figuren zu entnehmen.

Ein Aspekt der vorliegenden Erfindung betrifft einen Modulverbinder für Batterien für ein Fahrzeug, mit zwei Verbindungsteilen, die elektrisch leitend miteinander verbindbar sind. Das erste Verbindungsteil weist ein erstes Leiterelement und ein erstes Kontaktelement auf. Das zweite Verbindungsteil weist ein zweites Leiterelement und ein zweites Kontaktelement auf. Die beiden Verbindungsteile sind über ein gemeinsames Befestigungselement miteinander verbindbar, wobei in dem ersten Verbindungsteil in einem Zwischenraum zwischen dem Befestigungselement und dem ersten Kontaktelement ein Trennelement angeordnet ist und das Befestigungselement durch das Trennelement hindurch verläuft.

Zur Herstellung einer elektrisch leitenden Verbindung zwischen den beiden Verbindungsteilen ist der Modulverbinder ausgebildet, durch eine Veränderung der Position des Befestigungselements von einem ersten Zustand, in dem keine elektrische leitende Verbindung zwischen beiden Verbindungsteilen besteht, in einen zweiten, elektrisch leitenden Zustand der beiden Verbindungsteile, eine Kontaktfläche des ersten Kontaktelements des ersten Leiterelements mit einer Kontaktfläche des zweiten Kontaktelements des zweiten Leiterelements in direkten Kontakt zu bringen.

Dabei sind die Kontaktflächen der beiden Leiterelemente als jeweils zu einer Vertikalen V zumindest teilweise schräg-verlaufende Kontaktflächen der Kontaktelemente ausgebildet, welche bei einer elektrisch leitenden Kontaktierung zueinander komplementär ausgerichtet sind. Auf diese Weise wird eine auch schon bei verhältnismäßig geringem Anschraubmoment des Befestigungselements gute und formschlüssige Kontaktverbindung zwischen den beiden schräge-verlaufenden Kontaktflächen der Verbindungselemente hergestellt.

Der Grundgedanke der vorliegenden Erfindung besteht deshalb darin, dass durch die schräg-verlaufende Kontaktflächen der beiden Leiterelemente und der dadurch entstehenden formschlüssigen Kontaktverbindung der beiden Verbindungselemente des Modulverbinders eine größere Kontaktfläche erzielt werden kann. Gleichzeitig wird durch die Kraftumlenkung eine höhere Kontaktkraft bei einem niedrigeren Anzugsmoment erreicht. Zudem wird ein Verschweißen oder ein Verkleben der Kontaktflächen der beiden Leiterelemente der beiden Verbindungselemente des Modulverbinders im Einsatzfall minimiert wird. Selbst nach mehrmaligen Steck- oder Kontaktierungszyklen zwischen den beiden Verbindungselementen des erfindungsgemäßen Modulverbinders verändert sich deshalb der Kraftaufwand nicht wesentlich, um die beiden Kontaktflächen der Kontaktelemente der beiden Leiterelemente des Modulverbinders voneinander trennen zu können. Auf diese Weise kann infolge der konisch bzw. schräg-verlaufenden Kontaktflächen der Kontaktelemente eine hohe Kontaktkraft erzielt werden und es ist zudem ein geringeres Anschraubmoment erforderlich.

Durch die schräg-verlaufenden Kontaktflächen der beiden Leiterelemente wird ein Verschleiß der Kontaktoberflächen der beiden Leiterelemente des erfindungsgemäßen Modulverbinders bei einem wiederholten Schließen und Trennen der elektrischen Kontaktierung deshalb bei der vorliegenden Erfindung auf vorteilhafte Weise minimiert oder zumindest hinausgezögert. Dies führt zu einer verbesserten Funktionalität sowie einer erhöhten Lebensdauer des Modulverbinders, die zugleich mit einer verminderten Wartungsanfälligkeit des Modulverbinders einhergeht.

Gemäß einer Ausführungsform ist der Modulverbinder ausgebildet, bei einem Öffnen des Befestigungselementes die beiden Verbindungsteile zwangsweise auseinander zu ziehen, sodass das Befestigungselement gleichzeitig in eine Anfang- oder Parkposition gebracht wird und das Befestigungselement elektrisch von dem zweiten Kontaktelement des zweiten Leiterelements getrennt wird. Dadurch wird auf einfache Weise eine Berührschutzfunktion bereitgestellt.

Gemäß einer Ausführungsform ist das Trennelement konusförmig ausgebildet und weist in einem Abschnitt eine Durchtrittsöffnung zum Durchtritt des Befestigungselements auf. Dadurch wird der Vorteil erzielt, dass das Trennelement eine möglichst große Kontaktoberfläche in Bezug auf das Befestigungselement bereitstellt, wodurch erreicht wird, dass eine direkte Berührung der stromführenden Teile des Modulverbinders erschwert wird.

Gemäß einer Ausführungsform weist das erste Verbindungsteil ein erstes, äußeres Berührschutzelement und ein zweites, inneres Berührschutzelement auf, wobei das zweite, innere Berührschutzelement durch das Berührschutzelement gebildet wird, wenn sich das Berührschutzelement in der Ausgangs- oder Parkposition befindet und es damit nicht mehr elektrisch-leitend mit dem zweiten Kontaktelement des zweiten Leiterelements verbunden ist, und wobei das zweite Verbindungsteil ein zweites äußeres Berührschutzelement und ein zweites inneres Berührschutzelement auf. Dadurch wird der Vorteil erzielt, dass der Modulverbinder eine umfassende und flexible Schutzfunktion gegen unbeabsichtigtes Berühren von strom- oder spannungsführenden Komponenten aufweist, unabhängig davon, von welcher Seite oder Position man den Modulverbinder greift. Zugleich sind kleinere Schraubkräfte erforderlich sind, um das Befestigungselement in dem Modulverbinder anzubringen.

Gemäß einer Ausführungsform ist das zweite, innere Berührschutzelement des zweiten Verbindungselements ausgebildet, in einem zweiten Zwischenraum zwischen dem zweiten Kontaktelement des zweiten Verbindungsteils und dem Befestigungselement angebracht zu werden. Dadurch wird der Vorteil der Bereitstellung einer einfach umzusetzenden und flexiblen Berührschutzfunktion innerhalb des Modulverbinders erzielt. Durch die Bereitstellung von im bzw. am Modulverbinder an unterschiedlichen Positionen angeordneten Berührschutzelementen wird ferner der Vorteil erzielt, dass eine einfachere Montage bzw. De-Montage und eine einfachere Herstellung des Modulverbinders ermöglicht wird. Zudem können die inneren und äußeren Berührschutzelemente der jeweiligen Verbindungselemente jeweils voneinander unterschiedliche Formen haben und aus unterschiedlichen Materialien bestehen. Dadurch wird der Vorteil erreicht, dass durch eine vergrößerte Kontaktoberfläche eine direkte Berührung von strom- oder spannungsführenden führenden Teilen des Modulverbinders von verschiedenen Seiten oder Richtungen des Modulverbinders zumindest erschwert wird. Ferner ist dadurch auf vorteilhafte Weise eine flexible Einstellung bzw. Konfiguration der benötigten Berührschutzfunktion in Abhängigkeit von unterschiedlich gewählten Einsatzszenarien des erfindungsgemäßen Modulverbinders möglich.

Gemäß einer Ausführungsform weist der Modulverbinder ein Isolierelement auf, welches ausgebildet ist, eine elektrisch-isolierende Verbindung zwischen den beiden Leiterelementen und den jeweiligen Kontaktflächen der beiden Verbindungsteile herzustellen. Dadurch wird der Vorteil erreicht, dass die Handhabung des Modulverbinders und minimiert das Risiko einer Berührung von stromführenden Teilen des Modulverbinders.

Gemäß einer Ausführungsform weist das erste Verbindungsteil eine äußere, elektrisch isolierende Schutzmanschette auf, die das Befestigungselement umgibt. Dadurch wird der Vorteil erreicht, dass der Zugang zu dem Befestigungselement erschwert wird und somit das Befestigungselement sowie weitere stromtragende Komponenten des Modulverbinders nicht direkt berührt werden können. Auf diese wird zudem die Handhabung des Modulverbinders bei Installation und Deinstallation verbessert.

Gemäß einer Ausführungsform weist die Schutzmanschette eine Kodierung auf, welche das Verbinden des ersten Verbindungsteils mit dem zweiten Verbindungsteil in definierten Winkelpositionen um eine Rotationsachse erlaubt. Vorzugsweise erfolgt das Verbinden des ersten Verbindungsteils mit dem zweiten Verbindungsteil mit zueinander kompatibel ausgelegten Verbindungsteilen. Dadurch wird der Vorteil erreicht, dass ein sicheres und korrektes Verbinden der beiden Leiterelemente für unterschiedliche Anwendungs- und Einsatzszenarien des Modulverbinders in Bezug auf Position und Lage der miteinander zu verbindenden elektrischen Leiterelemente im Fahrzeug ermöglicht wird.

Gemäß einer Ausführungsform weist die Kodierung mindestens ein oder mehrere Kodierelemente, die als Zahnelemente ausgebildet sein können, auf, welche asymmetrisch in einem definierten Winkelabstand zueinander angeordnet sind. Durch die asymmetrische Anordnung der Kodierelemente können nur kompatible Verbindungsteile kontaktiert werden, eine Fehlkontaktierung, eine Verpolung oder ein Kurzschluss wird somit verhindert.

Gemäß einer Ausführungsform weist das erste Verbindungsteil ein elektrisch isolierendes Deckel- oder Kragenelement mit einer Durchtrittsöffnung auf. Dadurch wird der Vorteil erreicht, dass der Modulverbinder einfacher handzuhaben ist, da eine direkte Berührung von strom- oder spannnungsführenden Komponenten des Modulverbinders verhindert wird.

Gemäß einer Ausführungsform sind die beiden Verbindungsteile zumindest abschnittsweise von einem elektrisch isolierenden Hüllelement umgeben. Dadurch wird der Vorteil erreicht, dass auf einfache Weise eine direkte Berührung von strom- oder spannungführenden Teilen des Modulverbinders unterbunden wird und der Modulverbinder während Installation und Deinstallation in einem Fahrzeug leichter zu handhaben ist.

### Kurze Beschreibung der Figuren

Fig. 1 zeigt eine Schnittansicht eines Modulverbinders gemäß einer Ausführungsform.
Fig. 2 zeigt eine Schnittansicht eines Modulverbinders gemäß einer Ausführungsform.
Fig. 3 zeigt eine Schnittansicht eines Modulverbinders gemäß einer Ausführungsform.
Fig. 4 zeigt eine perspektivische Schnittansicht eines ersten Verbindungsteils eines Modulverbinders gemäß einer Ausführungsform.
Fig. 5 zeigt eine perspektivische Schnittansicht eines zweiten Verbindungsteils eines Modulverbinders gemäß einer Ausführungsform.
Fig. 6 zeigt eine perspektivische Schnittansicht eines Teils eines ersten Verbindungsteils eines Modulverbinders gemäß einer Ausführungsform.
Fig. 7 zeigt eine perspektivische Schnittansicht eines Teils eines zweiten Verbindungsteils eines Modulverbinders gemäß einer Ausführungsform.
Fig. 8 zeigt ein Trennelement des ersten Kontaktelements des ersten Verbindungsteils gemäß einer Ausführungsform.
Fig. 9 zeigt ein Gegenelement gemäß einer Ausführungsform.
Fig. 10 zeigt ein zweites, inneres Berührschutzelement des zweiten Kontaktelements des zweiten Verbindungsteils gemäß einer Ausführungsform.
Fig. 11 zeigt eine Schnittansicht des ersten Verbindungsteils und des zweiten Verbindungsteils eines Modulverbinders gemäß einer Ausführungsform.
Fig. 12 zeigt eine perspektivische Ansicht eines Modulverbinders gemäß einer Ausführungsform.
Fig. 13 zeigt in Draufsicht einen Modulverbinder gemäß einer Ausführungsform.
Fig. 14 zeigt einen Schnitt durch die ineinandergreifenden Schutzmanschetten der beiden Verbindungsteile eines Modulverbinders mit ineinandergreifender Kodierung gemäß einer Ausführungsform.
Fig. 15 zeigt in Draufsicht einen Modulverbinder mit einer Schutzmanschette gemäß einer Ausführungsform.

### Detaillierte Beschreibung von Ausführungsformen

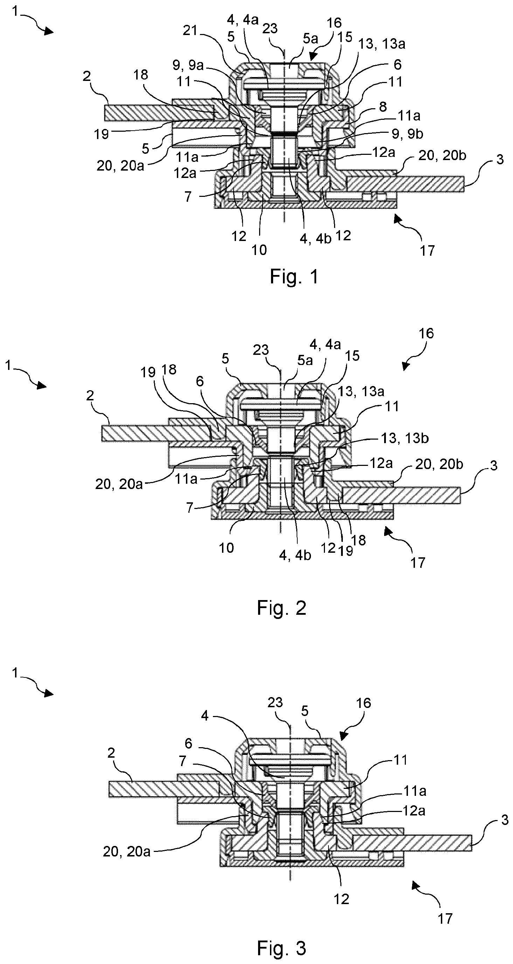

Fig. 1 zeigt eine Schnittansicht eines Modulverbinders 1 gemäß einer Ausführungsform.

Der Modulverbinder 1 weist zwei Verbindungsteile 16, 17 auf, die elektrisch leitend miteinander verbunden sind. Das erste Verbindungsteil 16 weist ein erstes Leiterelement 2 und ein erstes Kontaktelement 11 auf. Das zweite Verbindungsteil 17 weist ein zweites Leiterelement 3 und ein zweites Kontaktelement 12 auf. Die beiden Leiterelemente 2, 3 können dabei jeweils als Stromschienen ausgebildet sein. Die Leiterelemente 2, 3 sind zumindest teilweise oder abschnittsweise elektrisch isoliert durch ein diese umgebendes Hüllelement oder eine Isolierung 20. Das Hüllelement bzw. die Isolierung 20 besteht aus einem ersten Hüllelement 20a des ersten Verbindungsteils 16 und einem zweiten Hüllelement 20b des zweiten Verbindungsteils 17, wie es in der Fig. 1 gezeigt ist. Der Modulverbinder 1 weist ein aus einem elektrisch isolierenden Material bestehendes Deckel- oder Kragenelement 5 mit einer Durchtrittsöffnung 5a auf.

Das Deckel- oder Kragenelement 5 hat eine erste Funktion, die strom- und spannungsführenden Teile im Inneren des Modulverbinders 1 durch eine direkte Berührung von außen abzuschirmen bzw. zu trennen.

Die zweite Funktion des Deckel- oder Kragenelements 5 besteht darin, dass mittels der Durchtrittsöffnung 5a des Deckel- oder Kragenelements 5 des ersten Verbindungsteils 16 des Modulverbinders 1 das Befestigungselement 4 , zum Beispiel mit Hilfe eines hier nicht dargestellten Werkzeugs, angetrieben werden kann, um das Betätigungselement 4 von einer Anfangs- oder Parkposition in eine entsprechende Endposition zu bringen, sodass eine elektrisch leitende Verbindung zwischen den beiden Leiterelementen 2, 3 der Verbindungsteile 16, 17 des Modulverbinders herstellbar ist.

Die beiden Verbindungsteile 16, 17 sind über ein gemeinsames Befestigungselement 4 miteinander verbunden. Das Befestigungselement 4 ist in der dargestellten Ausführungsform als eine Schraube oder ein Bolzen aus Metall ausgebildet. Das Befestigungselement weist einen Kopfabschnitt 4a und einen Fußabschnitt 4b auf. Das Befestigungselement 4 ist dabei als ein strom- oder spannungsführendes Teil des Modulverbinders 1 anzusehen, welches es vor einem direkten Berühren abzuschirmen gilt. Diese Funktion übernimmt ein Trennelement 6, wie es nachfolgend im Detail noch näher erläutert wird.

Die Fig. 1 zeigt, dass in einem ersten Zwischenraum 9, 9a des ersten Verbindungsteils 16 des Modulverbinders 1 zwischen dem Befestigungselement 4 und dem ersten Kontaktelement 11 ein als isolierende Distanzbuche ausgebildetes Trennelement 6 angeordnet ist. Das Befestigungselement 4 verläuft durch das Trennelement 6 hindurch bzw. es wird von dem Trennelement 6 geführt.

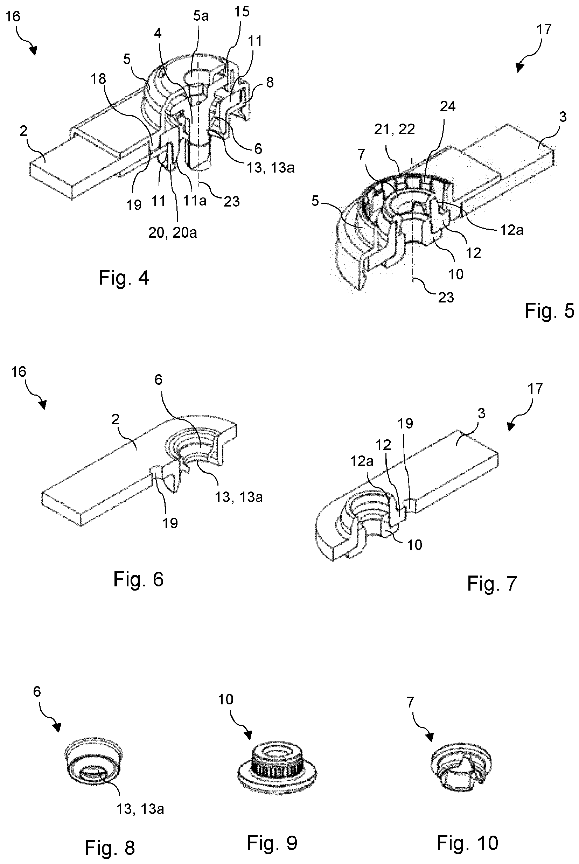

In der Fig. 1 ist zu erkennen, dass das Trennelement 6 eine konusförmige Form aufweist und in einem Abschnitt eine Durchtrittsöffnung 13, 13a zum Durchtritt des Befestigungselements 4 umfasst. Das Trennelement 6 ist dabei als isolierende, konusförmige Distanzbuche (siehe auch Fig. 6) ausgebildet. Das Trennelement 6 hält dabei das Befestigungselement bzw. die Schraube 4 in einer mittigen oder zentrierten Position in Bezug auf den Modulverbinder 1. Das Trennelement 6 hat ferner die Aufgabe, das Befestigungselement 4 elektrisch von dem ersten Kontaktelement 11 zu trennen.

Das Befestigungselement 4 ist von einer Anfang- oder Parkposition, in der keine elektrisch leitende Verbindung zwischen den beiden Leiterelementen 2, 3 der beiden Verbindungsteile 16, 17 des Modulverbinders 1 besteht, in eine Endposition bewegbar. In der Endposition ist das Befestigungselement 4 mit einer Mutter oder einer Einpressmutter fixiert. Die Mutter bzw. die Einpressmutter wird dabei von dem als eine Gewindebuchse ausgebildeten Gegenelement 10 gebildet, mit dem der Fußabschnitt 4b des Befestigungselements 4 in der Endposition des Befestigungselements 4 fixiert wird. Die Fixierung kann dabei als eine Verschraubung, Verrastung, Verclipsung oder Einpressung oder allgemein gesprochen, als eine beliebige ausgebildete form- oder kraftschlüssige Verbindung zwischen dem Befestigungselement 4 und dem Gegenelement 10 ausgebildet sein.

Das Befestigungselement 4 wird dabei an seinem Kopfabschnitt 4a, wie es zum Beispiel in der Fig. 1 oder Fig. 2 dargestellt ist, durch mindestens ein Halteelement 15 in dem aus Kunststoff bestehenden Deckelelement 5 in seiner Anfangs- oder Parkposition gehalten, in der das Befestigungselement 4 nicht mit elektrisch leitenden Elementen - zum Beispiel mit dem ersten Kontaktelement 11 und dem zweiten Kontaktelement 12 in einem direkten Kontakt ist.

Auf diese Weise stellt das Befestigungselement 4 einen Berührschutz innerhalb des ersten Verbindungsteils 16 dar, obwohl das Befestigungselement 4 aus Metall besteht. Das Halteelement 15 kann dabei mehrere Halteelemente mit Schnappfunktion aufweisen.

Zudem kann durch das als Schutzkappe ausgebildete Deckel- oder Kragenelement 5 auf vorteilhafte Weise an der Oberseite 4b des Befestigungselements 4 ein Berührschutz installiert werden kann, ohne das Befestigungselement 4 selbst gesondert isolieren zu müssen. Das reduziert die Kosten bei der Fertigung des Modulverbinders 1.

Bei einem Lösen des Befestigungselements 4 wird eine Zwangsöffnung der beiden miteinander verbundenen bzw. aufeinanderliegenden Kontaktflächen 11a, 12a der ersten und zweiten Kontaktelemente 11, 12 bewirkt. Das bedeutet, dass die Kontaktfläche 11a des ersten Kontaktelements 11 von der Kontaktfläche 12a des zweiten Kontaktelements 12 getrennt wird bzw. allgemein gesprochen, dass die beiden Kontaktflächen 11a und 12a der beiden Kontaktelemente 11 und 12 auseinandergezogen werden.

Bei dem Lösen des Befestigungselements 4 wird das Befestigungselement 4 von seiner Endposition in eine Anfangs- oder Parkposition gebracht. Dabei wird das Befestigungselement 4 aus dem als eine Gewindebuchse ausgebildeten Gegenelement 10 herausgedreht, wenn das Befestigungselement 4 als Schraube ausgebildet ist. Dieser Betriebszustand des Modulverbinders 1 ist beispielhaft in der Fig. 2 dargestellt.

In der Anfangs- oder Parkposition - wie dies in der Fig. 1 und der Fig. 2 dargestellt ist - des Befestigungselements 4 liegen die Kontaktfläche 11a des ersten Kontaktelements 11 und die Kontaktfläche 12a des zweiten Kontaktelements 12 nicht aufeinander, sodass in diesem ersten Zustand keine elektrisch leitende Verbindung zwischen dem ersten Leiterelement 2 des ersten Verbindungsteils 16 und dem zweiten Leiterelement 3 des zweiten Verbindungsteils 17 besteht.

In der Endposition des Befestigungselements 4 liegen - wie dies in der Fig. 3 dargestellt ist - die Kontaktfläche 11a des ersten Kontaktelements 11 und die Kontaktfläche 12a des zweiten Kontaktelements 12 hingegen direkt aufeinander, sodass in diesem zweiten Zustand eine elektrisch leitende Verbindung zwischen dem ersten Leiterelement 2 des ersten Verbindungsteils 16 und dem zweiten Leiterelement 3 des zweiten Verbindungsteils 17 besteht. Die Kontaktflächen 11a, 12a der Kontaktelemente 11, 12 sollen eine möglichst große Oberfläche aufweisen, um einen Übergangswiderstand zwischen den beiden Kontaktflächen 11, 12 möglichst klein zu halten.

In der Fig. 1 ist weiter dargestellt, dass das erste Verbindungsteil 16 ein erstes, äußeres Berührschutzelement 20a und ein zweites, inneres Berührschutzelement 4b aufweist. Der zweite, innere Berührschutz des ersten Verbindungsteils 16 wird durch den Fußabschnitt 4b des Befestigungselements 4 gebildet, da das Befestigungselement 4, wenn es sich in seiner Anfangs- oder Parkposition befindet, elektrisch von dem zweiten Kontaktelement 12 bzw. von dem zweiten Leiterelement (3) getrennt ist.

In der Fig. 1 ist weiter dargestellt, dass das zweite Verbindungsteil 17 ein zweites, äußeres Berührschutzelement 20b und ein zweites, inneres Berührschutzelement 7 aufweist. Das zweite, innere Berührschutzelement 7 ist als eine isolierende Distanzbuchse ausgebildet.

In der Fig. 1 ist zu sehen, dass das zweite, innere Berührschutzelement 7 des zweiten Verbindungsteils 17 ausgebildet ist, in einem zweiten Zwischenraum 9, 9b zwischen dem zweiten Kontaktelement 12 des zweiten Verbindungsteils 17 und dem Befestigungselement 4 angebracht zu werden. Das zweite, innere Berührschutzelement 7 wird dabei vorzugsweise im Zwischenraum 9,9b eingeclipst und verrastet.

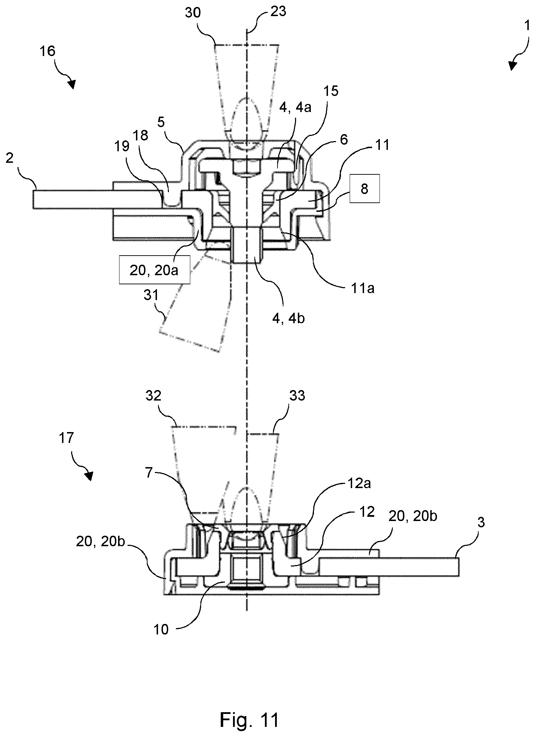

Die zuvor genannten Berührschutzelemente 7, 20a, 20b bestehen aus einem elektrisch isolierenden Material und verhindern ein ungewolltes Berühren von strom- und spannungsführenden Teilen. Dies wird auch anschaulich in der Fig. 11 durch die genormten Prüffinger 30, 32, 33 dargestellt, die aufgrund der zuvor genannten Berührschutzelemente strom- und spannungsführende Teile des Modulverbinders 1 nicht berühren können.

In der Fig. 1 ist zu sehen, dass das Trennelement 6 in dem ersten Verbindungsteil 16 in einem ersten Zwischenraum 9, 9a zwischen dem Befestigungselement 4 und dem ersten Kontaktelement 11 angeordnet ist. Das Befestigungselement 4 verläuft über eine Durchtrittsöffnung 13a in dem Trennelement 6 hindurch bzw. es wird von dem Trennelement 6 geführt.

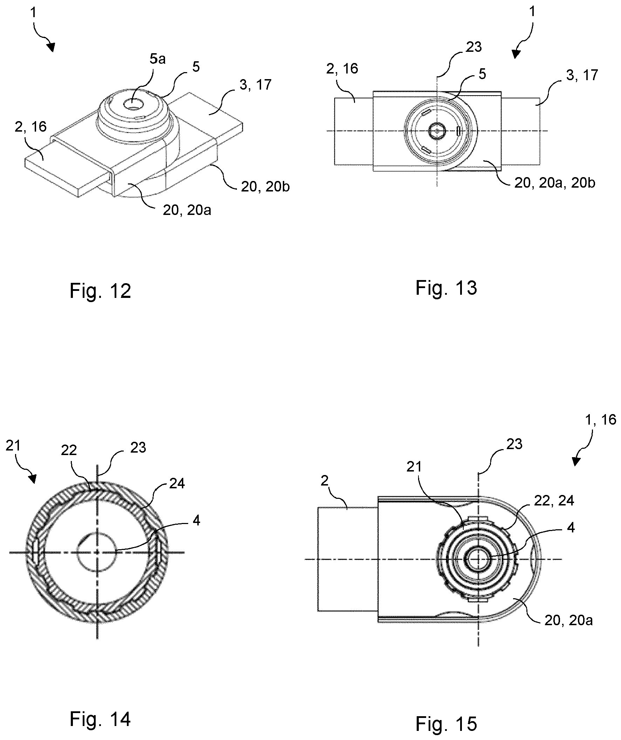

Das Trennelement 6 grenzt dabei an einem ersten (oberen) Abschnitt des Befestigungselements 4. Entsprechend dazu, und auch dies zeigt die Fig. 1, ist auch das zweite, innere Berührschutzelement 7 ausgebildet, in einem zweiten Zwischenraum 9b zwischen dem Befestigungselement 4 und dem zweiten Kontaktelement 12 des zweiten Verbindungsteils 17 an einem zweiten (unteren) Abschnitt des Befestigungselements 4 anzugrenzen. Das zweite, innere Berührschutzelement 7 weist eine Durchtrittsöffnung 13b (siehe Fig. 2 und Fig. 6) auf, durch die das Befestigungselement 4 tritt bzw. es wird von diesem geführt. Ferner ist in der Ausführungsform des Modulverbinders 1 gemäß der Fig. 1 und auch in den Fig. 14 bzw. 15 zu erkennen, dass hier die Kodierungen ineinandergreifen.

Die Fig. 3 zeig eine Schnittansicht eines Modulverbinders 1 gemäß einer Ausführungsform des Modulverbinders 1 in einem zweiten Betriebszustand, in welchem nun eine elektrisch leitende Verbindung zwischen den beiden Leiterelementen 2, 3 der beiden Verbindungsteile 16, 17 des Modulverbinders 1 hergestellt ist. Dabei greifen die Verbindungsteile 16 und 17 in der in der Fig. 3 dargestellten Ausführungsform ineinander, dies bedeutet, dass diese miteinander mechanisch verbunden sind.

Dieser zweite Betriebszustand - der elektrische leitende Zustand - wird durch eine Veränderung der Position des Befestigungselements 4 von einem ersten Zustand, in dem keine elektrische leitende Verbindung zwischen beiden Verbindungsteilen 16, 17 besteht, in einen zweiten, elektrisch leitenden Zustand der beiden Verbindungsteile 16, 17 erreicht, indem eine Kontaktfläche 11a des ersten Kontaktelements 11 des ersten Leiterelements 2 mit einer Kontaktfläche 12a des zweiten Kontaktelements 12 des zweiten Leiterelements 3 in direkten Kontakt gebracht wird.

Die kann beispielsweise dadurch erfolgen, dass das Befestigungselement 4 von einer ersten Position - der Ausgangs- oder Parkposition gemäß Fig. 1 - in eine zweite Position, der Endposition des Modulverbinders 1 gemäß Fig. 3, bewegt wird, zum Beispiel durch ein Hineindrehen des Befestigungselements 4 in das Gegenelement 10 das auf einer Bodenfläche des Modulverbinders 1 arretiert ist. Das Gegenelement 10 kann dabei als sogenannte "Mutter" bzw. als Einpressmutter ausgebildet sein, in das der Fußabschnitt 4b des Befestigungselements 4 eingreift, wenn das Befestigungselement 4 von seiner Anfangs- oder Parkposition in seine Endposition gebracht wird.

Dabei sind die Kontaktflächen 11a, 12a der beiden Leiterelemente 2, 3 jeweils zu einer Vertikalen V, 23 zumindest teilweise schräg-verlaufende Kontaktflächen 11a, 12a ausgebildet, welche bei einer elektrisch leitenden Kontaktierung zueinander komplementär ausgerichtet sind, um eine formschlüssige Kontaktverbindung zwischen den beiden schräge-verlaufenden Kontaktflächen 11a, 12a der Kontaktelemente 11, 12 herstellen.

Der Konuswinkel der beiden schräg zueinander verlaufenden Kontaktflächen 11a, 12a der beiden Kontaktelemente 11, 12 beträgt vorzugsweise 45 Grad. Andere geeignete Winkelmaße für den Konuswinkel sind jedoch denkbar und einstellbar in Abhängigkeit von einem gewählten Einsatzszenario des erfindungsgemäßen Modulverbinders. Die Kontaktflächen 11a, 12a weisen eine möglichst geringe Rauhigkeit auf, vorzugsweise Rₐ < 0,4. Die Oberflächen der Kontaktflächen 11, a12 sind vorzugsweise mit Silber oder Zinn beschichtet, um einen möglichst niedrigen Übergangswiderstand zu erzielen.

In den Fig. 1, 2, 4 und 6 ist jeweils im ersten Verbindungsteil 16 zu erkennen, dass das Deckelelement 5 einen Kontaktzapfen 18 aufweist, welcher in ein Loch oder in einen Durchgang 19 des ersten Leiterelements 2 eingreift.

Die Fig. 1 bis 3 zeigen ferner, dass der Modulverbinder 1 ein Isolierelement 8 aufweist. Damit lässt sich eine elektrisch-isolierende Verbindung zwischen den beiden Leiterelementen 2, 3 der beiden Verbindungsteile 16, 17 des Modulverbinders 1, welche als Stromschienen oder Flachleiter ausgebildet sein können, und den jeweiligen Kontaktflächen 11a, 12a der beiden Verbindungsteile 16, 17 auf einfache Weise herzustellen.

Fig. 4 zeigt eine perspektivische Schnittansicht eines ersten Verbindungsteils 16 eines Modulverbinders 1 gemäß einer Ausführungsform. In dieser Ansicht ist zu erkennen, wie das Befestigungselement 4 mit seinem Fußabschnitt 4b durch eine Durchgangsöffnung 13a des konusförmig verlaufenden Trennelements 6 tritt und verläuft.

Die Kontaktfläche 11a des ersten Kontaktelements 11 ist dabei über das Isolierelement 8 mit dem ersten Leiterelement 2 verbunden. Der Modulverbinder 1 zeigt einen Teilausschnitt des Deckel- oder Kragenelements 5 mit seiner - hier beispielhaft kreisrund ausgebildeten Durchgangsöffnung 5a. Die Durchgangsöffnung 5a kann auch eine andere Form aufweisen, falls dies dem Einsatzzweck des Modulverbinders 1 zweckdienlich ist.

Fig. 5 zeigt eine perspektivische Schnittansicht eines zweiten Verbindungsteils 17 eines Modulverbinders 1 gemäß einer Ausführungsform. In dieser Ansicht ist das zweite Berührschutzelement 7 zu erkennen, welches auf dem zweiten Kontaktelement 12 angeordnet ist, das wiederum auf einem hier nur angedeuteten als eingepresstes Gegenelement oder Gewindebuchse 10 angeordnet ist. Das zweite Kontaktelement 12 weist eine schräg-verlaufende Kontaktfläche 12a auf. In der Fig. 5 ist auch der Aufbau der Schutzmanschette 21 zu erkennen, die einzelne Zahnelemente 24 aufweist, die umlaufend um eine Rotationsachse 23 angeordnet sind.

Die in einem definierten Winkel zueinander versetzt angeordneten Zahnelemente 24 bilden dabei die Kodierung 22 der Schutzmanschette 21. Die Schutzmanschette 21 ist dabei ein integraler Teil des Deckel- oder Kragenelements 5 und umlaufend um das zweite, innere Berührschutzelement 7 des zweiten Verbindungsteils 17 und um das Befestigungselement 10 (nicht dargestellt) angeordnet. Die Schutzmanschette 21 bildet auf diese Weise einen äußeren Berührschutz zum zweiten Kontaktelement 12, welches unter Strom- oder Spannung stehen kann.

Fig. 6 zeigt eine perspektivische Schnittansicht eines Teils eines ersten Verbindungsteils 16 des erste Leiterelements 2 eines Modulverbinders 1 gemäß einer Ausführungsform. Das konusförmige ausgebildete Trennelement 6 ist hier im Teilschnitt mit seiner Durchtrittsöffnung 13a zu sehen. Das Trennelement 6 ist dabei als eine isolierende Distanzbuchse ausgebildet.

Fig. 7 zeigt eine perspektivische Schnittansicht eines Teils eines zweiten Verbindungsteils 17 des zweiten Leiterelements 3 eines Modulverbinders 1 gemäß einer Ausführungsform. Im Schnitt ist die Kontaktfläche 12a des zweiten Kontaktelements 12 und dem Gegenelement 10 dargestellt. In dem zweiten Leiterelement 3 ist ein Loch oder eine Durchbohrung 19 zu sehen.

Fig. 8 zeigt ein Trennelement 6 des ersten Verbindungsteils 16 (nicht dargestellt) gemäß einer Ausführungsform, wobei das Trennelement 6 eine konusförmige Form besitzt. Das Trennelement 6 weist eine Bohrung oder eine als Rundloch ausgebildete Durchtrittsöffnung 13a auf.

Fig. 9 zeigt ein Gegenelement 10 gemäß einer Ausführungsform. Dieses kann ein Innengewinde (nicht dargestellt) aufweisen, um das Befestigungselement 4 (nicht dargestellt) darin zu fixieren. Das Gegenelement 10 ist in der gezeigten Ausführungsform eine Gewindebuchse bzw. ein eingepresstes Befestigungselement.

Fig. 10 zeigt ein zweites, inneres Berührschutzelement 7 des zweiten Verbindungsteils 17 mit als Schnapphaken ausgebildeten Abschnitten über welche das Berührschutzelement 7 in das zweite Kontaktelement 12 (nicht dargestellt) eingeclipst oder mit diesem verrastet werden kann. Das Berührschutzelement 7 ist dabei als eine isolierende Distanzbuchse ausgebildet.

Fig. 11 zeigt eine Schnittansicht des ersten Verbindungsteils 16 und des zweiten Verbindungsteils 17 eines Modulverbinders 1 gemäß einer Ausführungsform. Hier sind sogenannte Prüffinger 30, 31, 32, 33 an den entsprechenden Positionen des Modulverbinders 1 eingezeichnet.

Der Prüffinger 30, der in die Durchgangsöffnung 5a des Deckel- und Kragenelements 5 eingreift, stellt exemplarisch dar, wie durch das herausragende Deckel- oder Kragenelement 5 das Berühren von strom- oder spannungsführenden Teilen, hier zum Beispiel das Befestigungselement 4, im Inneren des ersten Verbindungsteils 16 des Modulverbinders 1 verhindert und somit ein direkter Kontakt mit diesen strom- oder spannungsführenden Teilen des Modulverbinders 1, hier das Befestigungselement 4, unterbunden wird.

Der Prüffinger 31 stellt exemplarisch dar, wie durch den Fußabschnitt 4b des Befestigungselements 4, der auch als zweites, inneres Berührschutzelement bezeichnet wird, das Berühren von strom- oder spannungsführenden Teilen, hier zum Beispiel die Kontaktflächen 11a des ersten Kontaktelements 11, im Inneren des ersten Verbindungsteils 16 des Modulverbinders 1 verhindert und somit ein direkter Kontakt mit diesen strom- oder spannungsführenden Teilen des Modulverbinders 1 unterbunden wird.

Der Prüffinger 32 stellt exemplarisch dar, wie infolge des entsprechend angeordneten zweiten, inneren Berührschutzelements 7 innerhalb des zweiten Verbindungsteils 17 das Berühren von strom- oder spannungsführenden Teilen, hier zum Beispiel die Kontaktflächen 12a des zweiten Kontaktelements 12, im Inneren des zweiten Verbindungsteils 17 des Modulverbinders 1 verhindert und somit ein direkter Kontakt mit diesen strom- oder spannungsführenden Teilen des Modulverbinders 1 unterbunden wird.

Der Prüffinger 33 stellt exemplarisch dar, wie infolge des entsprechend angeordneten zweiten, inneren Berührschutzelements 7, welche auch als Schutzkappe oder isolierende Distanzbuchse angesehen wird, innerhalb des zweiten Verbindungsteils 17, das Berühren von strom- oder spannungsführenden Teilen, hier zum Beispiel die Kontaktflächen 12a des zweiten Kontaktelements 12, im Inneren des zweiten Verbindungsteils 17 des Modulverbinders 1 verhindert und somit ein direkter Kontakt mit diesen strom- oder spannungsführenden Teilen des Modulverbinders 1 unterbunden wird.

Fig. 12 zeigt eine perspektivische Ansicht eines Modulverbinders 1 gemäß einer Ausführungsform. Der Modulverbinder 1 weist ein elektrisch isolierenden Hüllelement 20 auf, welches aus einem Hüllelement 20a und einem weiteren Hüllelement 20b besteht, dass die beiden Verbindungsteile 16, 17 zumindest abschnittsweise umgibt und elektrisch isolierend in Bezug auf die Leiterelemente 2, 3 wirkt. Das Hüllelement 20b wird auch als zweites, äußeres Berührschutzelement des zweiten Verbindungsteils 17 bezeichnet. Der Modulverbinder 1 weist zudem ein elektrisch isolierendes Deckel- oder Kragenelement 5 mit einer Durchtrittsöffnung 5a auf.

Fig. 13 zeigt in Draufsicht den Modulverbinder 1 gemäß Fig. 12 mit den beiden Verbindungsteilen 16, 17.

Fig. 14 zeigt einen Schnitt durch die ineinandergreifenden Schutzmanschetten 21 der beiden Verbindungsteile 16, 17 mit ineinandergreifender Kodierung gemäß einer Ausführungsform. Die Schutzmanschette 21 weist eine Kodierung 22 auf, welche das Verbinden des ersten Verbindungsteils 16 mit dem zweiten Verbindungsteil 17 in definierten Winkelpositionen um eine Rotationsachse 23 erlaubt. Die Kodierung 22 weist dabei eine Vielzahl von um die Schutzmanschette 21 rotationssymmetrisch angeordnete und als Zahnelemente ausgebildete Kodierelemente 24 auf, welche in einem definierten Winkelabstand zueinander angeordnet sind. Die Kodierelemente 24 können dabei jeweils voneinander unterschiedlich ausgebildet sein.

Die asymmetrische Verzahnung der Kodierung 22 ermöglicht nur dann eine elektrische Kontaktierung der Verbindungsteile 16, 17, wenn beide die richtige und zueinander kompatible Kodierung aufweisen. Das Befestigungselement 4 ist dabei zentrisch in Bezug zur Schutzmanschette 21 angeordnet.

Fig. 15 zeigt in Draufsicht einen Modulverbinder 1 mit einen ersten Verbindungsteil 16, einem ersten Leiterelement 2, einem elektrisch isolierenden Hüllelement 20, 20a sowie mit einer Schutzmanschette 21 gemäß einer Ausführungsform nach Fig. 14.

### Bezugszeichenliste

- 1: Modulverbinder
- 2: Erstes Leiterelement
- 3: Zweites Leiterelement
- 4: Befestigungselement
- 4a: Kopfabschnitt des Befestigungselements
- 4b: Fußabschnitt des Befestigungselements
- 5: Deckel- oder Kragenelement
- 5a: Durchgangsöffnung des Deckel- oder Kragenelements
- 6: Trennelement
- 7: Zweites, inneres Berührschutzelement des zweiten Verbindungsteils
- 8: Isolierelement
- 9, 9a, 9b: Zwischenraum
- 10: Gegenelement
- 11: Erstes Kontaktelement
- 11a: Kontaktfläche des ersten Kontaktelements
- 12: Zweites Kontaktelement
- 12a: Kontaktfläche des zweiten Kontaktelements
- 13, 13a, 13b: Durchtrittsöffnung
- 15: Halteelement
- 16: Erstes Verbindungsteil
- 17: Zweites Verbindungsteil
- 18: Kontaktzapfen
- 19: Loch
- 20: Hüllelement / Isolierung
- 20a: Hüllelement und erstes, äußeres Berührschutzelement des ersten Verbindungsteils
- 20b: Hüllelement und zweites, äußeres Berührschutzelement des zweiten Verbindungsteils
- 21: Schutzmanschette
- 22: Kodierung
- 23: Rotationsachse V
- 24: Zahnelement
- 30, 31, 32, 33: Prüffinger
- V: Vertikale Achse

## Patentansprüche

1. Modulverbinder (1), insbesondere für Batterien für ein Fahrzeug,
mit zwei Verbindungsteilen (16, 17), die elektrisch leitend miteinander verbindbar sind, wobei das erste Verbindungsteil (16) ein erstes Leiterelement (2) und ein erstes Kontaktelement (11) aufweist, das zweite Verbindungsteil (17) ein zweites Leiterelement (3) und ein zweites Verbindungselement (12) aufweist,
wobei die beiden Verbindungsteile (16, 17) über ein gemeinsames Befestigungselement (4) miteinander verbindbar sind,
wobei in dem ersten Verbindungsteil (16) in einem Zwischenraum (9, 9a, 9b) zwischen dem Befestigungselement (4) und dem ersten Kontaktelement (11) ein Trennelement (6) angeordnet ist und das Befestigungselement (4) durch das Trennelement (6) hindurch verläuft, und
wobei zur Herstellung einer elektrisch leitenden Verbindung zwischen den beiden Verbindungsteilen (16, 17) der Modulverbinder (1) ausgebildet ist, durch eine Veränderung der Position des Befestigungselements (4) von einem ersten Zustand, in dem keine elektrische leitende Verbindung zwischen beiden Verbindungsteilen (16, 17) besteht, in einen zweiten, elektrisch leitenden Zustand der beiden Verbindungsteile (16, 17), eine Kontaktfläche (11a) des ersten Kontaktelements (11) des ersten Leiterelements (2) mit einer Kontaktfläche (12a) des zweiten Kontaktelements (12) des zweiten Leiterelements (3) in direkten Kontakt zu bringen, wobei die Kontaktflächen (11a, 12a) der beiden Leiterelemente (2, 3) jeweils zu einer Vertikalen V zumindest teilweise schräg-verlaufende Kontaktflächen (11a, 12a) der Kontaktelemente (11, 12) ausgebildet sind, welche bei einer elektrisch leitenden Kontaktierung zueinander komplementär ausgerichtet sind, um eine formschlüssige Kontaktverbindung zwischen den beiden schräge-verlaufenden Kontaktflächen (11a, 12a) der Kontaktelemente (11, 12) herstellen.

2. Modulverbinder (1) nach Anspruch 1, wobei der Modulverbinder (1) ausgebildet ist, bei einem Öffnen des Befestigungselementes (4) die beiden Verbindungsteile (16, 17) zwangsweise auseinander zu ziehen, sodass das Befestigungselement (4) gleichzeitig in eine Anfang- oder Parkposition gebracht wird und das Befestigungselement (4) elektrisch von dem zweiten Kontaktelement (12) des zweiten Leiterelements (3) getrennt wird, um eine Berührschutzfunktion bereitzustellen.

3. Modulverbinder (1) nach einem der vorangegangenen Ansprüche, wobei das Trennelement (6) konusförmig ausgebildet ist und in einem Abschnitt eine Durchtrittsöffnung (13) zum Durchtritt des Befestigungselements (4) aufweist.

4. Modulverbinder (1) nach Anspruch 2, wobei das erste Verbindungsteil (16) ein erstes, äußeres Berührschutzelement (20a) und ein zweites, inneres Berührschutzelement (4b) aufweist, wobei das zweite, innere Berührschutzelement (4b) vorzugsweise durch das Befestigungselement (4) gebildet wird, wenn sich das Befestigungselement (4) in der Ausgangs- oder Parkposition befindet und es damit nicht mehr elektrisch-leitend mit dem zweiten Kontaktelement (12) des zweiten Leiterelements (3) verbunden ist, und wobei das zweite Verbindungsteil (17) ein zweites äußeres Berührschutzelement (20b) und ein zweites inneres Berührschutzelement (7) aufweist.

5. Modulverbinder (1) nach Anspruch 4, wobei das zweite, innere Berührschutzelement (7) des zweiten Verbindungsteils (17) ausgebildet ist, in einem zweiten Zwischenraum (9, 9b) zwischen dem zweiten Kontaktelement (12) des zweiten Verbindungsteils (17) und dem Befestigungselement (4) angebracht zu werden.

6. Modulverbinder (1) nach einem der vorangegangenen Ansprüche, wobei der Modulverbinder (1) ein Isolierelement (8) aufweist, welches ausgebildet ist, eine elektrisch isolierende Verbindung zwischen den beiden Leiterelementen (2, 3) und den jeweiligen Kontaktflächen (11a, 12a) der beiden Verbindungsteile (16, 17) herzustellen.

7. Modulverbinder (1) nach einem der vorangegangenen Ansprüche, wobei das erste Verbindungsteil (16) eine äußere, elektrisch isolierende Schutzmanschette (21) aufweist, die das Kontaktelement (11a) und das Befestigungselement (4) umgibt.

8. Modulverbinder (1) nach Anspruch 7, wobei die Schutzmanschette (21) eine Kodierung (22) aufweist, welche das Verbinden des ersten Verbindungsteils (16) mit dem zweiten Verbindungsteil (17) in definierten Winkelpositionen um eine Rotationsachse (23) erlaubt.

9. Modulverbinder (1) nach Anspruch 8, wobei die Kodierung (22) mindestens ein oder mehrere Kodierelemente (24) aufweist, welche rotationsymmetrisch in einem definierten Winkelabstand zueinander angeordnet sind.

10. Modulverbinder (1) nach einem der vorangegangenen Ansprüche, wobei das erste Verbindungsteil (16) ein elektrisch isolierendes Deckel- oder Kragenelement (5) mit einer Durchtrittsöffnung (5a) aufweist.

11. Modulverbinder (1) nach einem der vorangegangenen Ansprüche, wobei die beiden Verbindungsteile zumindest abschnittsweise von einem elektrisch isolierenden Hüllelement (20) umgeben sind.

## Geänderte Patentansprüche

### Geänderte Patentansprüche gemäss Regel 137(2) EPÜ.

1. Modulverbinder (1) mit zwei Verbindungsteilen (16, 17), die elektrisch leitend miteinander verbindbar sind, wobei das erste Verbindungsteil (16) ein erstes Leiterelement (2) und ein erstes Kontaktelement (11) aufweist, das zweite Verbindungsteil (17) ein zweites Leiterelement (3) und ein zweites Verbindungselement (12) aufweist,
wobei die beiden Verbindungsteile (16, 17) über ein gemeinsames Befestigungselement (4) miteinander verbindbar sind,
wobei in dem ersten Verbindungsteil (16) in einem Zwischenraum (9, 9a, 9b) zwischen dem Befestigungselement (4) und dem ersten Kontaktelement (11) ein Trennelement (6) angeordnet ist und das Befestigungselement (4) durch das Trennelement (6) hindurch verläuft, und
wobei zur Herstellung einer elektrisch leitenden Verbindung zwischen den beiden Verbindungsteilen (16, 17) der Modulverbinder (1) ausgebildet ist, durch eine Veränderung der Position des Befestigungselements (4) von einem ersten Zustand, in dem keine elektrische leitende Verbindung zwischen beiden Verbindungsteilen (16, 17) besteht, in einen zweiten, elektrisch leitenden Zustand der beiden Verbindungsteile (16, 17), eine Kontaktfläche (11a) des ersten Kontaktelements (11) des ersten Leiterelements (2) mit einer Kontaktfläche (12a) des zweiten Kontaktelements (12) des zweiten Leiterelements (3) in direkten Kontakt zu bringen, wobei die Kontaktflächen (11a, 12a) der beiden Leiterelemente (2, 3) jeweils zu einer Vertikalen V zumindest teilweise schräg-verlaufende Kontaktflächen (11a, 12a) der Kontaktelemente (11, 12) ausgebildet sind, welche bei einer elektrisch leitenden Kontaktierung zueinander komplementär ausgerichtet sind, um eine formschlüssige Kontaktverbindung zwischen den beiden schräge-verlaufenden Kontaktflächen (11a, 12a) der Kontaktelemente (11, 12) herstellen.

2. Modulverbinder (1) nach Anspruch 1, wobei der Modulverbinder (1) ausgebildet ist, bei einem Öffnen des Befestigungselementes (4) die beiden Verbindungsteile (16, 17) zwangsweise auseinander zu ziehen, sodass das Befestigungselement (4) gleichzeitig in eine Anfang- oder Parkposition gebracht wird und das Befestigungselement (4) elektrisch von dem zweiten Kontaktelement (12) des zweiten Leiterelements (3) getrennt wird, um eine Berührschutzfunktion bereitzustellen.

3. Modulverbinder (1) nach einem der vorangegangenen Ansprüche, wobei das Trennelement (6) konusförmig ausgebildet ist und in einem Abschnitt eine Durchtrittsöffnung (13) zum Durchtritt des Befestigungselements (4) aufweist.

4. Modulverbinder (1) nach Anspruch 2, wobei das erste Verbindungsteil (16) ein erstes, äußeres Berührschutzelement (20a) und ein zweites, inneres Berührschutzelement (4b) aufweist, und wobei das zweite Verbindungsteil (17) ein zweites äußeres Berührschutzelement (20b) und ein zweites inneres Berührschutzelement (7) aufweist.

5. Modulverbinder (1) nach Anspruch 4, wobei das zweite, innere Berührschutzelement (7) des zweiten Verbindungsteils (17) ausgebildet ist, in einem zweiten Zwischenraum (9, 9b) zwischen dem zweiten Kontaktelement (12) des zweiten Verbindungsteils (17) und dem Befestigungselement (4) angebracht zu werden.

6. Modulverbinder (1) nach einem der vorangegangenen Ansprüche, wobei der Modulverbinder (1) ein Isolierelement (8) aufweist, welches ausgebildet ist, eine elektrisch isolierende Verbindung zwischen den beiden Leiterelementen (2, 3) und den jeweiligen Kontaktflächen (11a, 12a) der beiden Verbindungsteile (16, 17) herzustellen.

7. Modulverbinder (1) nach einem der vorangegangenen Ansprüche, wobei das erste Verbindungsteil (16) eine äußere, elektrisch isolierende Schutzmanschette (21) aufweist, die das Kontaktelement (11a) und das Befestigungselement (4) umgibt.

8. Modulverbinder (1) nach Anspruch 7, wobei die Schutzmanschette (21) eine Kodierung (22) aufweist, welche das Verbinden des ersten Verbindungsteils (16) mit dem zweiten Verbindungsteil (17) in definierten Winkelpositionen um eine Rotationsachse (23) erlaubt.

9. Modulverbinder (1) nach Anspruch 8, wobei die Kodierung (22) mindestens ein oder mehrere Kodierelemente (24) aufweist, welche rotationsymmetrisch in einem definierten Winkelabstand zueinander angeordnet sind.

10. Modulverbinder (1) nach einem der vorangegangenen Ansprüche, wobei das erste Verbindungsteil (16) ein elektrisch isolierendes Deckel- oder Kragenelement (5) mit einer Durchtrittsöffnung (5a) aufweist.

11. Modulverbinder (1) nach einem der vorangegangenen Ansprüche, wobei die beiden Verbindungsteile zumindest abschnittsweise von einem elektrisch isolierenden Hüllelement (20) umgeben sind.
